# EUROPEAN PATENT SPECIFICATION

(11) **EP 2 875 299 B1**
(45) Date of publication and mention of the grant of the patent: **27.02.2019**
(21) Application number: 13733954.5
(22) Date of filing: 03.07.2013
(51) Int. Cl.: F27B 3/18, F27D 3/00, F27D 13/00

(54) **PLANT AND RELATIVE PROCEDURE FOR THE CONTINUOUS FEEDING OF HEATED METALLIC MATERIAL TO A MELTING FURNACE FOR THE PRODUCTION OF STEEL**
ANLAGE UND ENTSPRECHENDES VERFAHREN ZUM KONTINUIERLICHEN FÖRDERN EINES ERWÄRMTEN METALLISCHEN MATERIALS IN EINEN SCHMELZOFEN ZUR HERSTELLUNG VON STAHL
USINE ET PROCÉDÉ CORRESPONDANT D'ALIMENTATION EN CONTINU EN MATIÈRE MÉTALLIQUE CHAUFFÉE D'UN FOUR DE FUSION DESTINÉ À LA PRODUCTION D'ACIER

(30) Priority: 19.07.2012 IT MI20121257
(43) Date of publication of application: 27.05.2015
(73) Proprietor: Tenova S.p.A., 20149 Milano (IT)
(72) Inventor: GIAVANI, Cesare, I-20123 Milano (IT); BOTTONE, Ernesto, 21052 Busto Arsizio Varese (IT); MONTI, Nicola,Ambrogio, Maria, I-20149 Milano (IT)
(74) Representative: Martegani, Franco
(86) International application number: PCT/EP2013/001941
(87) International publication number: WO 2014/012623

(56) References cited:
- JP-A- 7 027 489

## Description

The present invention relates to a plant and relative procedure for continuously feeding preheated metallic material to a melting furnace for the production of steel.

The present invention is advantageously used in plants for the continuous horizontal feeding of a heated metallic charge, consisting of scrap, into Electric Arc Furnaces (EAF) in a steel industry, preferably in plants known in the field with the registered name "Consteel", to which the following description will make explicit reference, at the same time maintaining its generic nature, said plants are described for example in patent documents EP0190313, EP0592723, US6155333 and WO2012007105.

In the production of steel using a melting process of a metallic charge, the continuous feeding of the charge is generally effected by means of horizontal conveyors or loaders which currently represent the most rational, simplest and most reliable solution.

These horizontal conveyors can be advantageously equipped with heating systems of the metallic charge before entering the melting furnace, in order to reduce the energy and time necessary for completing the melting process of the same.

For this purpose, passive heating systems and active heating systems are generally known: passive heating systems exploit the thermal and chemical energy (completion of the combustion of carbon monoxide and hydrogen) contained in the exhaust gases coming from the melting furnace, whereas active heating systems use heating devices, such as, for example, burners, suitable for heating the charge, as required, with a mixture of comburent and fuel in a ratio close to the stoichiometric ratio, i.e. with a more flexible and controllable supply of chemical energy than that obtained with passive systems, as it is not associated with fluctuations in the flow of the exhaust gases coming from the melting process in the furnace.

A particularly significant problem in plants for continuous horizontal charging with passive heating such as that described in the text of EP2112449 (Falkenreck and Schlueter), is the correct heat distribution within the metallic charge that is being fed.

The metallic charge, in fact, generally consists of variably shaped and sized scrap, which is arranged along the conveyor forming a layer characterized by the presence of cavities which lower the density and thermal conductivity of the layer.

The low thermal conductivity, in particular, hinders and slows down the heat transfer from the upper layers, those that receive heat directly from the heating systems (whether they be active or passive), to the lower layers, creating a more or less marked thermal stratification depending on the type of scrap treated.

This non-homogeneous heat distribution in the vertical section prevents high average temperatures from being obtained and increases the risk of reaching melting conditions in the surface layers of the charge that can damage the plant itself.

The problem of heat distribution in the metallic charge is further increased by the ever-increasing productivity demands that require layers of material having an ever-increasing thickness and shorter heating times.

Depending on the operative conditions, the heating of the metallic charge can only be considered efficient for a few tens of centimeters from the surface, whereas the lower layers remain cold.

With an increase in the average temperature of the charge, the heating efficiency decreases rapidly as an increase in the surface temperature of the layer of scrap drastically reduces the heat exchange between the latter and the hot fumes.

Discarding technical solutions which are inapplicable due to their complexity, installation costs and necessary maintenance, such as, for example, those indicated in JP10002673 (in which the scrap is preheated in an actual Kiln-type furnace) or similarly WO/2010/142104 or JP7286785 (where permanent magnets lift and mix the scrap) or, finally, CN2906510Y (where forced suction from below tries to transfer the heat to the lower layers), the only solution internationally recognized as being valid is that indicated in the "Consteel" patents mentioned at the beginning of this description.

Although dating back many years, this technology has remained a technological reference point, at least judging from the number of citations (at times inappropriate) made in more recent patents and utility models (among which some of those cited).

Japanese patent JP7027489 A discloses a plant in which resort is made to the juxtapositioning of various layers of scrap on the horizontal conveyor in order to improve the heat exchange efficiency between the exhaust gases of the melting furnace (off-gas) and layers themselves.

In the plant described above, the heat source (even if composite), however, is, in any case and always, directly connected with the charging channel of the scrap, producing a definite action (and direction of the heat flow) which is such as to privilege the layers closest to the melting furnace, which are in contact with the hottest and most rapid gases.

Moving further away from the heat source, in fact, the layers previously deposited are in contact with cooling gases which therefore guarantee a less efficient heat exchange.

In addition to this, there is the fact that the layers closest to the heat source choke the opening of the charging channel specifically where the gas is flowing parallel to the surface of the layers towards the subsequent sections of the channel and finally, the fume conveying group or chimney is equipped with most of the kinetic energy.

This creates turbulences which, if on the one hand, improve, to a small extent, the heat exchange just below the surface, on the other, reduce, by dissipating it, the total energy content of the gases.

The subsequent sections of the channel (in the flow direction of the fumes) become even less filled with scrap consequently leaving an increasingly high section for the gas, allowing it to expand, slow down and ultimately creating an increasing deterioration in the heat exchange with the metallic charge.

The overall effect of the plant described in the above Japanese patent JP7027489 A is therefore that of poorly heating the first layers deposited on the conveyor (in the advance direction of the scrap towards the furnace) which, as they are immediately buried under other layers of cold scrap and having a low thermal conductivity, provide an extremely limited contribution to the average temperature of the charge.

In practice, the high complication in the plant engineering introduced by the solution proposed by the above Japanese patent JP7027489 A does not provide any valid result in the average temperature that can be reached by the scrap and consequently in the electric saving induced.

This solution therefore neither provides a necessary direct control on the degree of heat exchange with the scrap along the feeding line nor does it optimize the heating, by regulating the penetration modes of the hot gases inside the metallic layer.

Furthermore, the person managing the feeding line of the plant described above does not have any degree of freedom in optimizing the process, for example, in relation to the type of scrap.

An objective of the present according to independent claims 1 and 11 is therefore to solve the considerable problems of the known art indicated above.

An objective of the present invention is to provide a continuous feeding plant of heated metallic material to a melting furnace, whereby an optimal controlled distribution of the heating energy can be obtained, with a much higher overall efficiency with respect to the plants of the known art.

A further objective of the present invention is to provide a plant whereby a high average temperature of the metallic charge fed by the horizontal conveyor can be obtained, without resorting to dangerous local surface melting phenomena which arise with the known plants.

Another objective of the present invention is to provide a process according to independent claim 11 capable of being optimized in relation to the type of scrap to be treated.

A further objective of the present invention is to provide a continuous feeding process of heated metallic material to a melting furnace operating in the above-mentioned plant, which allows a high flexibility in the choice of heating systems of the metallic charge before the latter reaches the melting furnace, and capable of guaranteeing a significant reduction in the electric consumptions of the steel production process.

The structural and functional characteristics of the present invention and its advantages with respect to the known art will appear more evident from the enclosed claims, and in particular from the following description, referring to the enclosed drawings which show the schematizations of two preferred but nonlimiting embodiments of a plant for the continuous feeding of heated metallic material to a melting furnace, in which:
- figure 1 represents a raised schematic view of a \ first preferred embodiment of a plant for the feeding of heated metallic material to a melting furnace;
- figure 2 represents a raised schematic view of a second preferred embodiment of a plant for the feeding of heated metallic material to a melting furnace;
- figure 3a represents a plan view of a plant defined by various lines and various heating sections, with active and passive means; and
- figure 3b a plan view of a plant similar to that of figure 3a, in which the depositing of the layers is perfectly alternating: cold layer on top of hot layer.

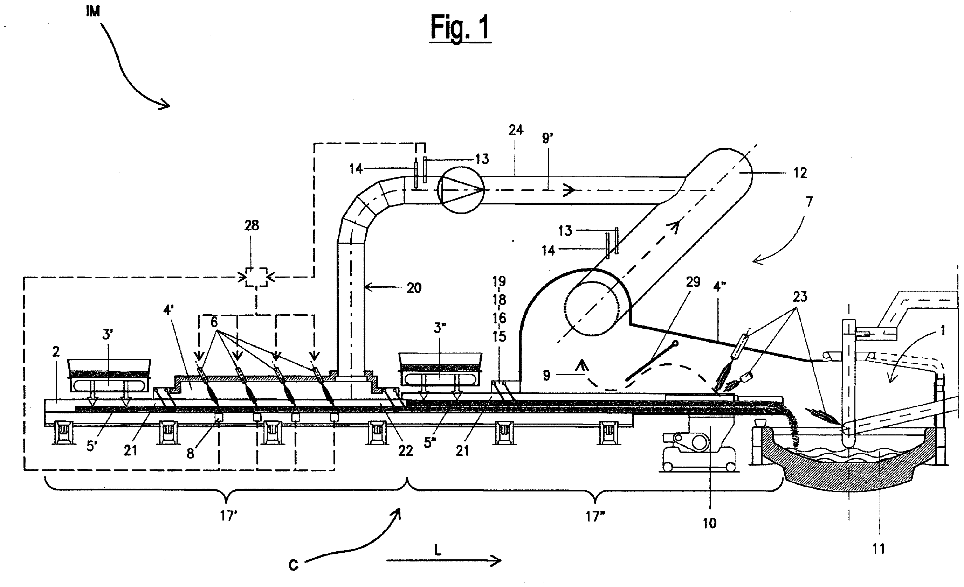

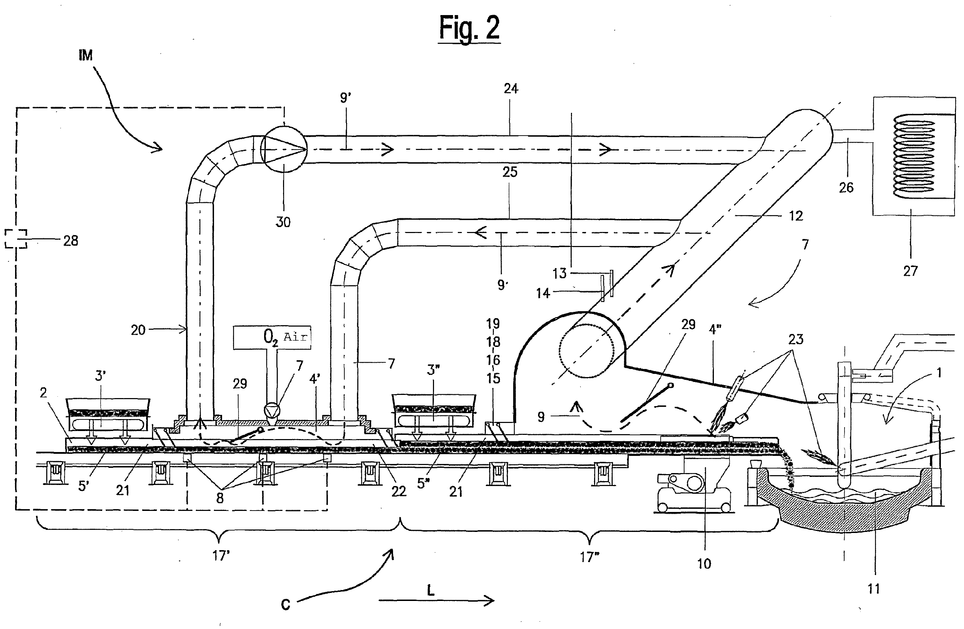

With reference to figures 1 and 2, IM indicates as a whole a continuous feeding plant of a metallic charge 5 of scrap to an Electric Arc Furnace (EAF) 1, in which there is a bath 11 of molten metal in the liquid state.

The plant IM comprises at least one horizontal conveyor 2 suitable for continuously moving the charge 5 forward to the EAF furnace 1 defining a respective continuous horizontal feeding line L of the charge 5 to a charging area 10 of the same furnace 1.

According to what is illustrated in figures 1 and 2, the line L comprises at least a pair C of operative modules 17' and 17".

The pair C is defined by a first operative module 17', which comprises a first formation and charging station 3' of a first layer 5' of the charge 5 on the conveyor 2, and a first heating section 4', in correspondence with which the first layer 5' of charge 5 on the conveyor 2 is suitably heated.

The pair C also comprises a second operative module 17", which is situated after the first module 17' and comprises a second formation and charging station 3" of a second layer 5" of the charge 5 superimposed on the first layer 5', and a second heating section 4", in correspondence with which the second layer 5" superimposed on the first layer 5' is suitably heated.

In this way, in the direction defined by the line L, the module 17' precedes the module 17", with the first heating section 4' positioned immediately downstream of the station 3', between the same station 3' and the station 3", whereas the second heating section 4" is positioned immediately downstream of the station 3" and upstream of the furnace 1.

Each of the above-mentioned sections 4',4" comprises an inlet portion 21 and an outlet portion 22.

According to what is illustrated in the embodiment of figure 1, the first heating section 4' of the first module 17' is defined by a system 6 with heating means of the active type comprising burners 6 (four in figure 1) suitable for heating the first layer 5' formed on the conveyor 2 by the station 3'.

Immediately downstream of the heating section 4', there is also an extraction system 20 of the fumes 9' leaving the same section, said system 20 comprising a duct 24, which is connected to an evacuation chimney 12 of the fumes 9 coming from the furnace 1 and equipped with suitable flow-control means (known and not illustrated).

According to the alternative embodiment illustrated in figure 2, the first heating section 4' of the first module 17' comprises a system 7 with heating means of the passive type defined by the fumes 9 or hot exhaust gases (off-gas and comburent) of the melting process leaving the EAF furnace 1.

After passing beyond the deflecting means 29 of the high-temperature gas flow, the fumes 9 flow towards the chimney 12 and reach a duct 25, equipped with flow-control means (known and not illustrated) and suitable for directing the same hot fumes 9 towards the first module 17' and therefore towards the first layer 5' in order to effect the heating of the first layer 5' itself formed on the conveyor 2 by the first station 3' .

Once the first layer 5' has been heated, the exhaust fumes 9' resulting from the heating can flow towards the chimney 12 through a recovery system 20 defined by a duct 26, equipped with flow-control means (known and not illustrated) and heat recovery means 27, of which an inlet is situated immediately downstream of the entry door 21 of the section 4'.

According to what is envisaged for both embodiments illustrated in figures 1 and 2, the heating section 4" of the second module 17" is defined by a system 7 with heating means of the passive type defined by the fumes 9 or hot exhaust gases of the melting process leaving the EAF furnace 1, and oriented towards the conveyor 2 of the above-mentioned adjustable deflectors 29 for increasing the convective heat exchange between the hot fumes 9 themselves and the charge 5, before the remaining portion of fumes 9 is sent towards the chimney 12.

The above chimney 12 is equipped with flow-rate analyzing means 13 of the fumes and analysis means 14 of the temperature and composition of the same fumes, said means 14 defined by sensors for the compositional and flow analysis, and also afterburners 23 to complete the combustion of the exhaust gases leaving the EAF furnace 1.

Finally, the following equipment forms an integrant part of the line L of the plant IM, in both the embodiment of figure 1 and in the alternative embodiment illustrated in figure 2: analyzing means 13 of the flow-rate of the fumes and analysis means 14 of the temperature and composition of the same fumes, filling sensors 15 and sensors 16 of the advance rate of the charge 5 on the conveyor 2, height limiters 18 of the charge 5 on the conveyor 2, sealing and confining means 19 of the exhaust fumes inside the heating section 4", and also a control system 28 of the line L, capable of managing, on the basis of the data acquired by the sensors 8 (four in figure 1 and three in figure 2) positioned in correspondence with the first heating section 4', the filling degree and addition of the charge 5 in the conveyor 2, the advancing of the charge 5 itself, the functioning regime of the active 6 and passive 7 heating systems and possibly the distribution of the exhaust gases.

In the plant IM configured according to figure 2, there are also heat recovery means 26 and 27 and an adjustable booster 30 of the flow-rate of the hot fumes.

When in use, the process effected by the plant IM described above along the line L, comprises, in correspondence with the first station 3' of the first module 17', the deposition and formation on the conveyor 2 of the first layer 5', having a controlled thickness, which is sent through the first heating section 4' and optimally heated therein, with the active system 6 (figure 1), or with the passive system 7 (alternative embodiment of figure 2).

At the outlet of the first heating section 4', the first layer 5', now hot, is immediately covered with a second layer 5", cold, also having a controlled thickness and introduced from the second station 3" of the second module 17". The whole charge 5 thus obtained, or thermal "wafer", is then introduced into the subsequent section 4" of the second module 17" itself.

In this way, along the line L, the last cold layer added 5", together with the hot underlying layer, finally enters the charging area 10 of the EAF melting furnace 1 and is exposed to the heating action of the exhaust gases 9 directly leaving the same furnace 1, before falling into the liquid bath 11.

It should be pointed out that in each heating section 4',4", the convective heat exchange between the exhaust gases and metallic charge is favoured by the fact that the flow of heating gases is directed towards the charge (with inciding flames when active heating systems are used, or with a vertical inlet in the case of passive systems) and also with the use of the deflectors 29.

In particular, the second layer 5" of metallic material is deposited in rapid succession onto the first layer 5' immediately at the outlet of the relative heating section 4': the hotter surface of the first layer 5' is thus immediately covered by cold material (and with a low thermal conductivity), and introduction into the subsequent section 4" allows the surface of the cold layer, which has just been deposited, to be heated (by means of the burners 6 or by the exhaust gases 9 leaving the EAF melting furnace 1) and, in depth, at the expense of the thermal content previously accumulated by the hot underlying layer 5'.

This passage of heat eliminates any possible local overheating (the surface part, which is hotter, of the first layer 5' is in close contact with the new cold scrap 5") even if it is confined within the charge 5 itself. In practice, as a result, heat losses are reduced by exploiting the same low thermal conductivity of the scrap which, in the known conventional plants, is the main hindrance to obtaining homogeneous heating of the metallic charge.

It should also be pointed out that one of the innovative features of the plant IM described above consists in the high flexibility in the choice of the heating systems used.

Apart from the principle of the heating being distributed over the consecutive layers of scrap described above, the configuration of the plant IM depends on the characteristics of the type of metallic material to be treated, the melting process to be effected in the EAF furnace and the local energy costs. In relation to these parameters, the most convenient choice can be made of a heating solution of the charge which comprises the use of burners (Figure 1), or with process fumes (Figure 2), or again, with other known heating means (based, for example, on electromagnetic radiation) or combinations of all or some of these heat sources.

This choice can be made either definitively in the projecting of the plant, or as a pre-arrangement, leaving the most convenient choice up to the manager of the system in relation to the characteristics of the steel production process considered, the materials in the charge and most convenient energy sources.

A further distinctive characteristic of the plant and process in question consists in the advantageous possibility of dividing the charge, in correspondence with the two above-mentioned operative modules, into two or more layers, which can be subjected to different forms of heating treatment, selected on the basis of the characteristics of the materials used (sizes, form, composition, degree of contamination with organic materials, etc.) in order to improve the energy efficiency of the heating process itself and reduce the environmental impact. The charge of scrap contaminated by oils, fats or plastic, can be concentrated, for example, in a first layer 5' subjected to heating with burners 6, regulated so as to fully exploit the presence of combustible material in the scrap (for example with an unbalanced functioning of the burners 6 in the sense of an excess of comburent) and ensure that conditions of complete thermodestruction of the polluting substances have been obtained, before reaching the final preheating section 4", by arranging it at the subsequent inlet of the furnace 1. In this case, a second layer 5" consisting of more suitable materials for being heating by means of the process fumes 9 alone, will be added in the charging station 3".

Another more specific feature of the plant and relative innovative process described is its modularity and versatility. Due to the considerable independence of the heating sections and low thermal conductivity of the material being moved/heated, there is, in fact, no theoretical limit to the treatment of the scrap before the final superimposing obtained in the last charging station.

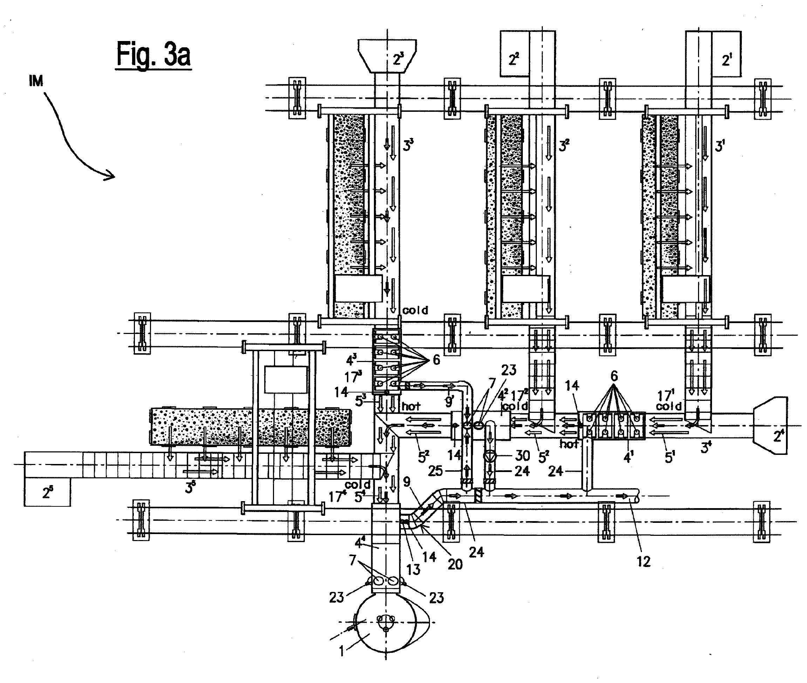

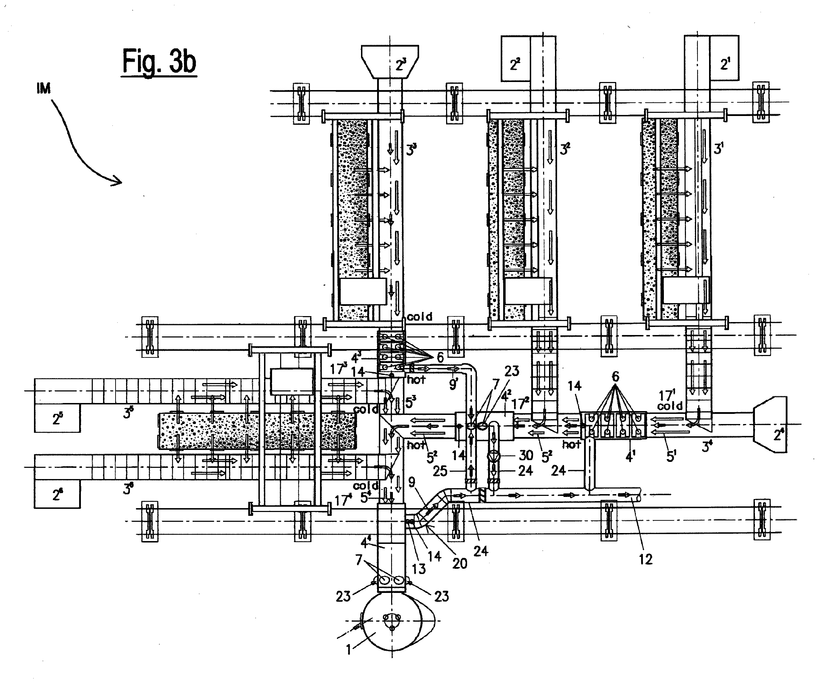

In other words, in the plant IM, there can be a combination of various charge elements 3ⁱ and heating elements 4ⁱ (with i=1,...,n) and/or pairs c of modules 17' and 17" arranged in succession, thus forming, as desired, sequential branches (consisting of one or more modules in series) and/or parallel (adjacent modules and/or branches for simultaneous treatment); reference should be made for example to the plants IM schematized in figures 3a and 3b.

The limits are governed by purely economic considerations and/or with respect to the encumbrance (layout) of the line L.

From what is specified above, it is evident that the plant IM described above overcomes the considerable problems of the state of the art, allowing the following advantages to be obtained:
- optimizing the preheating performances of scrap in a way which is significantly independent of the steel production process underway;
- more homogeneous heating of the layer of charge;
- reaching a preheating efficiency which is sufficient for guaranteeing a significant reduction in the electric consumptions of the steel production process;
- optimal modulating of the structure of the plant (layout) and process in compliance with current steelwork requirements.

## Claims

1. A plant (IM) for continuously feeding heated metallic material (5) to a melting furnace (1), comprising at least one feeding line (L) defined by a conveyor (2) for continuously advancing said material (5) to said furnace (1); comprising at least one pair (C) of operative modules (17',17") defined by a first (17') and a second (17") operative feeding and heating module, said first (17') and second (17") operative modules being positioned in succession with respect to each other along said line (L); said first module (17') being suitable for forming and heating a first layer (5') of said material (5) arranged on said line (L), and said second module (17") being suitable for forming and heating a second layer (5") of said material (5) arranged superimposed with respect to said first layer (5')
**characterized in that**
said first and second module (17',17") being suitable for directly heating respectively said first (5') and second layer (5") said first, second module (17';17") comprising a first, second feeding and charging station (3';3") of said material (5) for forming said first, second layer (5';5"), and a first, second heating section (4';4") of said first, second layer (5';5") positioned immediately downstream of said first, second charging station (3';3"),
said first and second heating section (4';4") being independent each other, so that said first and second layer can be subjected to different forms of heating treatment.

2. The plant according to claim 1, **characterized in that** said second heating section (4") is situated immediately upstream of a charging area (10) of said material (5) into said furnace (1).

3. The plant according to claim 1 or 2, **characterized in that** said first heating section (4') comprises active heating means (6) directed towards said first layer (5') for heating the first layer (5') itself.

4. The plant according to claim 3, **characterized in that** said active means (6) comprise burners (6) acting on said line (L).

5. The plant according to claim 1 or 2, **characterized in that** said first heating section (4') comprises passive heating means (7) directed towards said first layer (5') for heating the first layer (5') itself.

6. The plant according to one or more of the previous claims from 1 to 5, **characterized in that** said second heating section (4") comprises passive heating means (7) directed towards the second layer (5") for heating the second layer (5") itself.

7. The plant according to claim 5 or 6, **characterized in that** said passive means (7) comprise fumes (9) or gases leaving said furnace (1).

8. The plant according to claims 5 and 7,
**characterized in that** it comprises deflecting means (29) of said fumes (9) and conductor means (12,25) suitable for conveying the fumes (9) themselves from said furnace (1) to said first heating section (4'), in correspondence with an outlet door (22) of the first section (4')itself.

9. The plant according to claims 6 and 7,
**characterized in that** it comprises deflecting means (29) of said fumes (9) for directing the same fumes (9) towards the second layer (5").

10. The plant according to one or more of the previous claims from 1 to 9, **characterized in that** said first heating section (4') also comprises conductor means (20,24,12;20,26,12) suitable for conveying and evacuating exhaust fumes (9') leaving the first section (4') itself.

11. A process for continuously feeding heated metallic material (5) to a melting furnace (1), comprising the phase of continuously feeding said material (5) to said furnace (1) along at least one feeding line (L); the process comprising the phases of forming on said line (L), and heating, at least a first layer (5') of said material and, in rapid succession, forming at least a second layer (5") of said material (5) superimposed with respect to said first layer (5') and heating said second layer (5")
**characterized in that**
said heating of said first and second layer being executed in two heating section (4',4") independent each other so that said first and second layer can be subjected to different forms of heating treatment.

12. The process according to claim 11, **characterized in that** the heating phase of said second layer (5") is effected immediately before charging said material (5) into said furnace (1).

13. The process according to claim 11 or 12,
**characterized in that** said heating phase of said first layer (5') is effected through the use of burner means (6) directed towards the first layer (5') itself.

14. The process according to claim 11 or 12,
**characterized in that** said heating phase of said first layer (5') is effected with the use of fumes (9) or gases leaving said furnace (1) and sent towards the first layer (5') itself.

15. The process according to one or more of the previous claims from 11 to 14, **characterized in that** said heating phase of said second layer (5") is effected with the use of fumes (9) or gases leaving said furnace (1) and sent towards the second layer (5") itself.

16. The process according to one or more of the previous claims from 11 to 15, **characterized in that** it also comprises the phases of evacuating the exhaust fumes (9') created by said heating phases of said first and second layer (5',5").

## Patentansprüche

1. Anlage (IM) zum kontinuierlichen Zuführen von erhitztem Metallmaterial (5) zu einem Schmelzofen (1), umfassend zumindest eine Zufuhrstrecke (L), die durch eine Fördereinrichtung (2) zum kontinuierlichen Vorschub des Materials (5) in den Ofen (1) definiert ist; mit zumindest einem Paar (C) von Betriebsmodulen (17', 17"), die durch ein erstes (17') und ein zweites (17") Betriebsmodul zum zuführen und Heizen definiert sind, wobei das erste (17') und zweite (17") Betriebsmodul in Folge in Bezug zueinander entlang der Strecke (L) positioniert sind; wobei das erste Modul (17') zum Formen und Heizen einer ersten Schicht (5') des Materials (5) geeignet ist, das an der Strecke (L) angeordnet ist, und das zweite Modul (17") zum Formen und Heizen einer zweiten Schicht (5") des Materials (5) geeignet ist, die in Bezug auf die erste Schicht (5') überlagert angeordnet ist, **dadurch gekennzeichnet, dass** das erste und zweite Modul (17', 17") zum direkten Heizen jeweils der ersten (5') und zweiten Schicht (5") geeignet sind, wobei das erste, zweite Modul (17'; 17") eine erste, zweite Zufuhr- und Ladestation (3'; 3") des Materials (5) zum Bilden der ersten, zweiten Schicht (5'; 5") umfasst und ein erster, zweiter Heizabschnitt (4'; 4") der ersten, zweiten Schicht (5'; 5") unmittelbar stromabwärts der ersten, zweiten Ladestation (3'; 3") positioniert ist,
wobei der erste und zweite Heizabschnitt (4'; 4") unabhängig voneinander sind, so dass die erste und zweite Schicht verschiedenen Formen einer Wärmebehandlung unterzogen werden können.

2. Anlage nach Anspruch 1, **dadurch gekennzeichnet, dass** der zweite Heizabschnitt (4") unmittelbar stromaufwärts eines Ladebereichs (10) des Materials (5) in den Ofen (1) angeordnet ist.

3. Anlage nach einem der Ansprüche 1 oder 2, **dadurch gekennzeichnet, dass** der erste Heizabschnitt (4') ein aktives Heizmittel (6) umfasst, das zu der ersten Schicht (5') zum Heizen der ersten Schicht (5') gerichtet ist.

4. Anlage nach Anspruch 3, **dadurch gekennzeichnet, dass** das aktive Mittel (6) Brenner (6) umfasst, die auf die Strecke (L) wirken.

5. Anlage nach einem der Ansprüche 1 oder 2, **dadurch gekennzeichnet, dass** der erste Heizabschnitt (4') ein passives Heizmittel (7) umfasst, das zu der ersten Schicht (5') zum Heizen der ersten Schicht (5') gerichtet ist.

6. Anlage nach einem der Ansprüche 1 bis 5, **dadurch gekennzeichnet, dass** der zweite Heizabschnitt (4") ein passives Heizmittel (7) umfasst, das zu der zweiten Schicht (5") zum Heizen der zweiten Schicht (5") gerichtet ist.

7. Anlage nach einem der Ansprüche 5 oder 6, **dadurch gekennzeichnet, dass** das passive Mittel (7) Rauchgase (9) oder Gase umfasst, die den Ofen (1) verlassen.

8. Anlage nach einem der Ansprüche 5 oder 7, **dadurch gekennzeichnet, dass** sie ein Ablenkmittel (29) für die Rauchgase (9) sowie ein Leitmittel (12, 25) umfasst, das zum Fördern der Rauchgase (9) von dem Ofen (1) zu dem ersten Heizabschnitt (4') entsprechend einer Auslasstür (22) des ersten Abschnittes (4') geeignet ist.

9. Anlage nach einem der Ansprüche 6 oder 7, **dadurch gekennzeichnet, dass** sie ein Ablenkmittel (29) für die Rauchgase (9) zum Lenken der Rauchgase (9) zu der zweiten Schicht (5") umfasst.

10. Anlage nach einem der Ansprüche 1 bis 9, **dadurch gekennzeichnet, dass** der erste Heizabschnitt (4') auch ein Leitmittel (20, 24, 12; 20, 26, 12) umfasst, das zum Fördern und Evakuieren von Rauchabgasen (9'), die den ersten Abschnitt (4') verlassen, geeignet ist.

11. Prozess zum kontinuierlichen Zuführen von erhitztem Metallmaterial (5) zu einem Schmelzofen (1), mit der Phase zum kontinuierlichen Zuführen des Materials (5) zu dem Ofen (1) entlang zumindest einer Zufuhrstrecke (L); wobei der Prozess die Phasen zum Formen zumindest einer ersten Schicht (5') des Materials an der Strecke (L) und zum Erhitzen derselben und in schneller Abfolge zum Formen zumindest einer zweiten Schicht (5") des Materials (5), die in Bezug auf die erste Schicht (5') überlagert ist, und zum Erhitzen der zweiten Schicht (5") umfasst, **dadurch gekennzeichnet, dass** das Erhitzen der ersten und zweiten Schicht in zwei Heizabschnitten (4',4") unabhängig voneinander ausgeführt wird, so dass die erste und zweite Schicht verschiedenen Formen einer Wärmebehandlung unterzogen werden können.

12. Prozess nach Anspruch 11, **dadurch gekennzeichnet, dass** die Heizphase der zweiten Schicht (5") unmittelbar vor einem Laden des Materials (5) in den Ofen (1) bewirkt wird.

13. Prozess nach einem der Ansprüche 11 oder 12, **dadurch gekennzeichnet, dass** die Heizphase der ersten Schicht (5') durch den Gebrauch eines Brennermittels (6) bewirkt wird, das zu der ersten Schicht (5') selbst gerichtet ist.

14. Prozess nach einem der Ansprüche 11 oder 12, **dadurch gekennzeichnet, dass** die Heizphase der ersten Schicht (5') mit dem Gebrauch von Rauchgasen (9) oder Gasen, die den Ofen (1) verlassen und zu der ersten Schicht (5') gesendet werden, bewirkt wird.

15. Prozess nach einem der Ansprüche 11 bis 14, **dadurch gekennzeichnet, dass** die Heizphase der zweiten Schicht (5") mit dem Gebrauch von Rauchgasen (9) oder Gasen bewirkt wird, die den Ofen (1) verlassen und zu der zweiten Schicht (5") selbst geliefert werden.

16. Prozess nach einem der Ansprüche 11 bis 15, **dadurch gekennzeichnet, dass** er auch die Phasen zum Evakuieren der Rauchabgase (9'), die von den Heizphasen der ersten und zweiten Schicht (5',5") erzeugt werden, umfasst.

## Revendications

1. Usine (IM) pour l'alimentation en continu en matière métallique chauffée (5) d'un four de fusion (1), comprenant au moins une ligne d'alimentation (L) définie par un transporteur (2) pour faire avancer en continu ladite matière (5) vers ledit four (1) ; comprenant au moins une paire (C) de modules fonctionnels (17', 17") définis par des premier (17') et second (17") modules d'alimentation et de chauffage fonctionnels, lesdits premier (17') et second (17") modules fonctionnels étant positionnés successivement l'un par rapport à l'autre le long de ladite ligne (L) ; ledit premier module (17') étant approprié pour former et chauffer une première couche (5') de ladite matière (5) disposée sur ladite ligne (L), et ledit second module (17") étant approprié pour former et chauffer une seconde couche (5") de ladite matière (5) disposée de manière superposée par rapport à ladite première couche (5'),
**caractérisée par le fait que**
lesdits premier et second modules (17', 17") étant appropriés pour chauffer directement respectivement lesdites première (5') et seconde (5") couches, lesdits premier et second modules (17' ; 17") comprenant des première et seconde stations d'alimentation et de chargement (3' ; 3") de ladite matière (5) pour former lesdites première et seconde couches (5' ; 5"), et des première et seconde sections de chauffage (4' ; 4") desdites première et seconde couches (5' ; 5") étant positionnées immédiatement en aval desdites première et seconde stations de chargement (3' ; 3"),
lesdites première et seconde sections de chauffage (4' ; 4") étant indépendantes l'une de l'autre, de telle sorte que lesdites première et seconde couches peuvent être soumises à différentes formes de traitement de chauffage.

2. Usine selon la revendication 1, **caractérisée par le fait que** ladite seconde section de chauffage (4") est située immédiatement en amont d'une zone de chargement (10) de ladite matière (5) dans ledit four (1).

3. Usine selon la revendication 1 ou 2,
**caractérisée par le fait que** ladite première section de chauffage (4') comprend des moyens de chauffage actifs (6) dirigés vers ladite première couche (5') pour chauffer la première couche (5') elle-même.

4. Usine selon la revendication 3, **caractérisée par le fait que** lesdits moyens actifs (6) comprennent des brûleurs (6) agissant sur ladite ligne (L).

5. Usine selon la revendication 1 ou 2,
**caractérisée par le fait que** ladite première section de chauffage (4') comprend des moyens de chauffage passifs (7) dirigés vers ladite première couche (5') pour chauffer la première couche (5') elle-même.

6. Usine selon une ou plusieurs des revendications 1 à 5, **caractérisée par le fait que** ladite seconde section de chauffage (4") comprend des moyens de chauffage passifs (7) dirigés vers la seconde couche (5") pour chauffer la seconde couche (5") elle-même.

7. Usine selon la revendication 5 ou 6,
**caractérisée par le fait que** lesdits moyens passifs (7) comprennent des fumées (9) ou des gaz quittant ledit four (1) .

8. Usine selon les revendications 5 et 7,
**caractérisée par le fait qu'**elle comprend des moyens de déviation (29) desdites fumées (9) et des moyens conducteurs (12, 25) appropriés pour transporter les fumées (9) elles-mêmes dudit four (1) à ladite première section de chauffage (4'), en correspondance avec une porte de sortie (22) de la première section (4') elle-même.

9. Usine selon les revendications 6 et 7,
**caractérisée par le fait qu'**elle comprend des moyens de déviation (29) desdites fumées (9) pour diriger lesdites fumées (9) vers la seconde couche (5").

10. Usine selon une ou plusieurs des revendications 1 à 9, **caractérisée par le fait que** ladite première section de chauffage (4') comprend également des moyens conducteurs (20, 24, 12 ; 20, 26, 12) appropriés pour transporter et évacuer des fumées d'échappement (9') quittant la première section (4') elle-même.

11. Procédé d'alimentation en continu en matière métallique chauffée (5) d'un four de fusion (1), comprenant la phase d'alimentation en continu de ladite matière (5) vers ledit four (1) le long d'au moins une ligne d'alimentation (L) ; le procédé comprenant les phases de formation sur ladite ligne (L), et de chauffage, d'au moins une première couche (5') de ladite matière et, en succession rapide, de formation d'au moins une seconde couche (5") de ladite matière (5) superposée par rapport à ladite première couche (5') et de chauffage de ladite seconde couche (5"),
**caractérisé par le fait que** ledit chauffage desdites première et seconde couches étant exécuté dans deux sections de chauffage (4', 4") indépendantes l'une de l'autre de telle sorte que lesdites première et seconde couches peuvent être soumises à différentes formes de traitement de chauffage.

12. Procédé selon la revendication 11,
**caractérisé par le fait que** la phase de chauffage de ladite seconde couche (5") est réalisée immédiatement avant le chargement de ladite matière (5) dans ledit four (1).

13. Procédé selon la revendication 11 ou 12,
**caractérisé par le fait que** ladite phase de chauffage de ladite première couche (5') est réalisée à l'aide de moyens de brûleur (6) dirigés vers la première couche (5') elle-même.

14. Procédé selon la revendication 11 ou 12,
**caractérisé par le fait que** ladite phase de chauffage de ladite première couche (5') est réalisée à l'aide de fumées (9) ou des gaz quittant ledit four (1) et envoyée vers la première couche (5') elle-même.

15. Procédé selon une ou plusieurs des revendications 11 à 14, **caractérisé par le fait que** ladite phase de chauffage de ladite seconde couche (5") est réalisée à l'aide de fumées (9) ou des gaz quittant ledit four (1) et envoyée vers la seconde couche (5") elle-même.

16. Procédé selon une ou plusieurs des revendications 11 à 15, **caractérisé par le fait qu'**il comprend également les phases d'évacuation des fumées d'échappement (9') créées par lesdites phases de chauffage desdites première et seconde couches (5', 5").
